# EUROPÄISCHE PATENTSCHRIFT

(11) **EP 1 336 122 B1**
(45) Veröffentlichungstag und Bekanntmachung des Hinweises auf die Patenterteilung: **08.03.2006**
(21) Anmeldenummer: 02754713.2
(22) Anmeldetag: 19.06.2002
(51) Int. Cl.: G01V 8/20

(54) **SENSORANORDNUNG FÜR DIE ÜBERWACHUNG EINER RAUMZONE**
SENSOR ARRANGEMENT FOR MONITORING A SPATIAL AREA
ENSEMBLE CAPTEUR POUR LA SURVEILLANCE D'UNE ZONE SPATIALE

(30) Priorität: 19.06.2001 DE 10129230
(43) Veröffentlichungstag der Anmeldung: 20.08.2003
(73) Patentinhaber: DORMA GmbH + Co. KG, 58256 Ennepetal (DE)
(72) Erfinder: SEMELKA, Wolfgang, 58455 Witten (DE)
(86) Internationale Anmeldenummer: PCT/EP2002/006812
(87) Internationale Veröffentlichungsnummer: WO 2002/103400

(56) Entgegenhaltungen:
- DE-A- 19 936 441
- GB-A- 2 227 309
- US-A- 4 467 251
- US-A- 5 583 334
- US-A- 5 801 376
- US-A- 6 080 981

## Beschreibung

Die Erfindung betrifft eine Sensoranordnung nach dem Oberbegriff des Anspruchs 1.

In der US 4,467, 251 wird eine entsprechende fotoelektrische Einrichtung näher beschrieben, die als Senoreinrichtung unter anderem in Griffleisten von Türflügeln eingebaut werden kann, um den Raum vor dem Türflügel zu überwachen. Die Sensoranordnung besitzt ein nach Art einer Leiste über die gesamte Breite des Flügels erstreckendes Gehäuse, in dem Strahlen emittierende und Strahlen empfindliche Sensoren in großer Zahl linienförmig nebeneinander angeordnet sind. Die Strahlen, vorzugsweise Lichtstrahlen, werden dabei etwa in horizontaler Richtung emittiert, so dass bei entsprechender Einstellung der Leistung des emittierten Lichtes bzw. der Empfindlichkeit der Licht empfangenden Elemente eine sich etwa in Griffhöhe erstreckende Raumzone im Nahbereich des Türflügels überwacht wird. Diese Anordnung hat den Nachteil, dass sich die überwachte Raumzone nicht bis zum Boden erstreckt, so dass beispielsweise Kleinkinder die überwachte Raumzone unterkriechen können und dabei bei öffnenden Türflügeln gefährdet werden können.

Nachteilig ist bei der vorbekannten Zusammenfassung von Sendern und Empfängern zu kompakten und leistenförmigen Modulen, dass die Funktionsfähigkeit einzelner Sensoren nicht überprüfbar ist. Ein fehlerhaftes Modul kann nur aufgrund gegenüber einem Referenzwert abweichender Modul-Parameter ermittelt werden. Eine derartige Auswertung ist jedoch unbefriedigend, da ein solches Resultat keine genaue Fehlerquelle angibt und auch durch äußere Einflussfaktoren verursacht werden kann. Eine konkrete Aussage über den Defekt eines einzelnen Sensors ist nicht möglich. Dies ist jedoch äußerst wichtig, da derartige Einheiten wichtige, d. h. sicherheitsrelevante Funktionen haben und eine Fehlfunktion oder ein Funktionsausfall einzelner Sensoren im Extremfall bereits zu einer Verletzung der die Türanlage begehenden Person oder im Notfall, z. B. im Brandfall, weitaus weitreichendere Folgen haben kann.

Die Offenlegungsschrift DE-A1-199 36 441 offenbart eine optoelektronische Vorrichtung zum Erfassen von Objekten in einem Überwachungsbereich, wobei der Sendeoptik zu deren Überprüfung Test-Empfänger nachgeordnet sind, und der Empfangsoptik zu deren Überprüfung Test-Sender vorgeordnet sind.

Es ist die Aufgabe der Erfindung, eine Sensoranordnung nach dem Oberbegriff des Patentanspruches 1 zu entwickeln, deren Sicherheit und Zuverlässigkeit erhöht wird.

Die Aufgabe wird durch die kennzeichnenden Merkmale des Anspruchs 1 gelöst. Dadurch ist jederzeit eine konkrete Aussage über die Funktionsfähigkeit jedes Sensors möglich. Eine derartige Anordnung ermöglicht im Fehlerfalll eine exakte Störungsmeldung, so dass die Fehlerquelle sofort und eindeutig lokalisiert werden kann.

Die Sender und deren Hilfsempfänger sind jeweils nebeneinanderliegend zueinander angeordnet. Die Bauelemente sind vorteilhafterweise in dieser linienförmigen Anordnung in Vergussmaterial eingebettet und somit fixiert. Ein dergestalt ausgebildetes Modul kann durch ein Profil gekapselt werden, das seinerseits waagerecht an einem Türflügel montiert ist und um seine Längsachse verschwenkbar ist. Die gleiche Anordnung ist für die Empfänger und deren Hilfssender vorgesehen.

Die modulare Anordnung der Sensoren ermöglicht eine weitgehende Vormontage in der Fertigung. Des weiteren können die Module unabhängig voneinander auf ihre Funktionsfähigkeit überprüft werden, wobei durch die Anordnung der Hilfssender bzw. Hilfsempfänger jeder Sensor einzeln überprüft werden kann. In einer bevorzugten Ausführung sind die Sensoren austauschbar innerhalb des entsprechenden Modules angeordnet. Die einzelnen Sensoren sind dabei in entsprechenden Steckplätzen innerhalb eines Modulkörpers lösbar fixiert.

Um eine sowohl in der Breite als auch in der Tiefe ausgedehnte Raumzone zu überwachen, sind die benachbarten Sender so ausgelegt und beabstandet, dass ihre Strahlungsbündel divergieren sowie einander in einem erwünschten Mindestabstand vom abzutastenden Gegenstand überlappen. Der abzutastende Gegenstand wird daher gleichzeitig mit Strahlung aus unterschiedlichen Richtungen, also im Effekt mit diffuser Strahlung beaufschlagt und kann demgemäß auch bei ausgeprägten Lichtreflektionseigenschaften die Strahlung ebenso diffus reflektieren. Die benachbarten Empfänger können divergierende, im erwünschten Mindestabstand vom abzutastenden Gegenstand, einander überlappende Sichtfenster aufweisen, wobei die vom abzutastenden Gegenstand nach unterschiedlichen Richtungen reflektierte Strahlung von den Empfängern sicher erfasst wird.

Die Sensormodule bzw. deren Gehäuse lassen sich bei der erfindungsgemäßen Anordnung mit unterschiedlicher Neigung gegenüber der Flügelebene anordnen, so dass das jeweils überwachte Feld vor der Tür praktisch beliebige Formen haben kann. Dies ist insbesondere dann wesentlich, wenn im Überwachungsbereich störende Objekte, wie z. B. Schrankeinbauten oder dergleichen vorhanden sind. Durch entsprechende Ausrichtung der Sensormodule lässt sich erreichen, dass diese Objekte bei der Flügelbewegung nicht in das Blickfeld der Sensoren geraten und damit ein weiteres Aufschwenken der Tür verhindert werden kann.

In einer bevorzugten Ausführungsform werden die Sensormodule auf mit ihnen verbundenen Trägerelementen angeordnet, welche in einem am Flügel angeordnetes Profilteil mit wählbarer Neigung gegenüber der Flügelebene einsetzbar sind.

In einer bevorzugten Anwendung ist eine derartige Senderleiste und eine derartige Empfängerleiste mit geringem Abstand übereinander beispielsweise bodenseitig waagerecht an einer Tür angeordnet. Hierdurch ist gewährleistet, dass alle im Türbereich befindlichen Personen erfasst werden, unter anderem auch Kinder. Die bodenseitige Anordnung hat darüber hinaus den Vorteil, dass keine aufwendigen oder aufbauenden Elemente sichtbar sind. Es ist nicht notwendig, den Grundaufbau des Flügels in irgendeiner Weise abzuändern.

In einer weiteren Anwendung können beidseitig eines Flügels derartige Sender- und Empfängerleisten angeordnet werden. Dabei dient eine Einrichtung zum Öffnen des Flügels, wenn sich eine Person dem Flügel von der einen Seite nähert und in den Abtastbereich eintritt, während die andere Einrichtung ein Öffnen des Flügels verhindert, wenn sich eine andere Person oder ein Gegenstand im Abtastbereich der auf der anderen Flügelseite montierten Einrichtung befindet.

In der nachfolgenden Beschreibung wird die Erfindung anhand eines Ausführungbeispieles näher erläutert. Dabei zeigt:
- Figur 1:: Eine schematische Ansicht eines Sendermodules.
- Figur 2:: Eine schematische Ansicht eines Empfängermodules.
- Figur 3:: Auszugsweise das Schaltbild eines einzelnen Senders mit zugeordnetem Hilfsempfänger.
- Figur 4:: Auszugsweise das Schaltbild eines einzelnen Empfängers mit zugeordnetem Hilfssender.
- Figur 5:: Einen Teilausschnitt einer Seitenansicht eines Flügels einer Karusselltür mit bodenseitig montierter Senderleiste und Empfängerleiste.

Gleiche oder gleichwirkende Bauteile sind in der nachfolgenden Beschreibung mit gleichen Bezugszeichen versehen.

Die erfindungsgemäße Sensoranordnung besteht aus einer Anzahl von mehreren lichtemittierenden Halbleiterelementen, so genannten lichtemittierenden Dioden, als Sender 1 und einer Anzahl lichtempfindlicher Halbleiterelemente, wie Fototransistoren, als Empfänger 2. Sowohl Sender 1 als auch Empfänger 2 können üblicher Bauart sein und sind jeweils linienförmig in einer Reihe nebeneinander angeordnet. Innerhalb einer derartigen leistenartigen Anordnung ist jedem Sender 1 ein Hilfsempfänger 3 in Form eines Fototransistors und jedem Empfänger 2 ein Hilfssender 4 in Form einer Fotodiode zugeordnet.

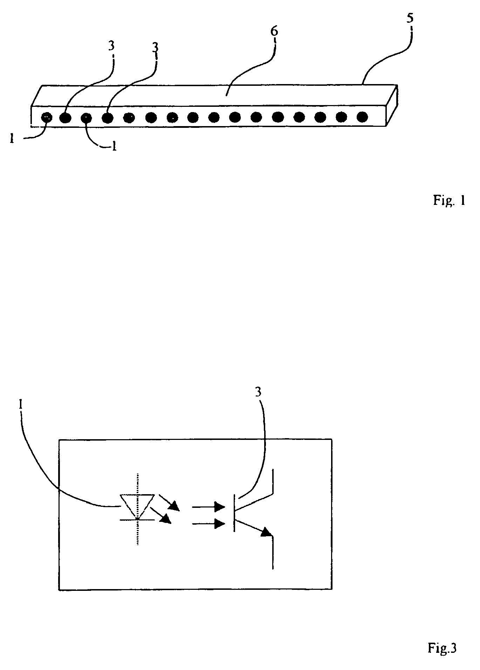

Mehrere Sender 1 und deren Hilfsempfänger 3 sind jeweils nebeneinanderliegend zu einem Sendermodul 5 zusammengefasst (Figur 1). Die Bauelemente sind vorteilhafterweise in einer Vergussmasse 6 eingebettet und somit in ihrer Lage zueinander fixiert. Das dergestalt ausgebildete Sendermodul 5 ist in einem Profil 7 angeordnet, das seinerseits waagerecht an einem motorisch angetriebenen Fügel 8 einer Tür montiert ist und um seine Längsachse verschwenkbar ist. Ein derart innerhalb des Profiles 7 angeordnetes Sendermodul 5 bildet eine vorgefertigte Senderleiste 9, die je nach örtlicher Gegebenheit auch nachträglich an dem Flügel 8 montierbar ist.

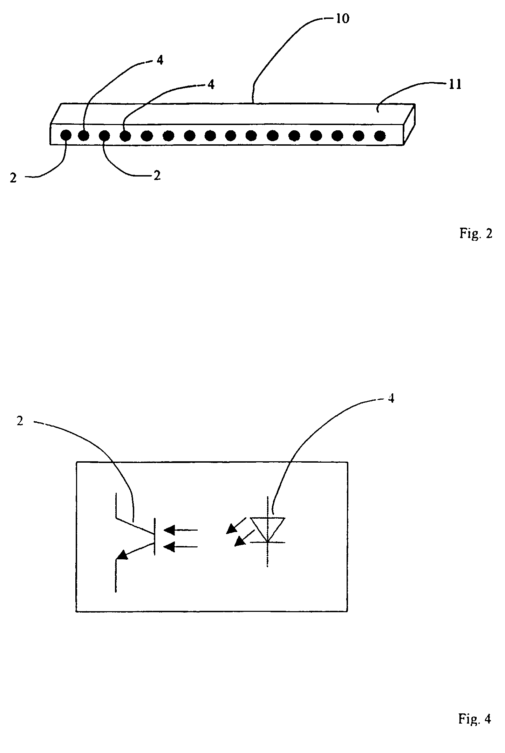

In gleicher Weise sind mehrere Empfänger 2 und deren Hilfssender 4 jeweils nebeneinanderliegend zu einem Empfängermodul 10 zusammengefasst (Figur 2). Die Bauelemente sind ebenfalls in einer Vergussmasse 11 eingebettet und somit in ihrer Lage zueinander fixiert. Das dergestalt ausgebildete Empfängermodul 10 ist ebenfalls in einem Profil 7 angeordnet, das seinerseits waagerecht an dem Flügel 8 montiert ist und um seine Längsachse verschwenkbar ist.

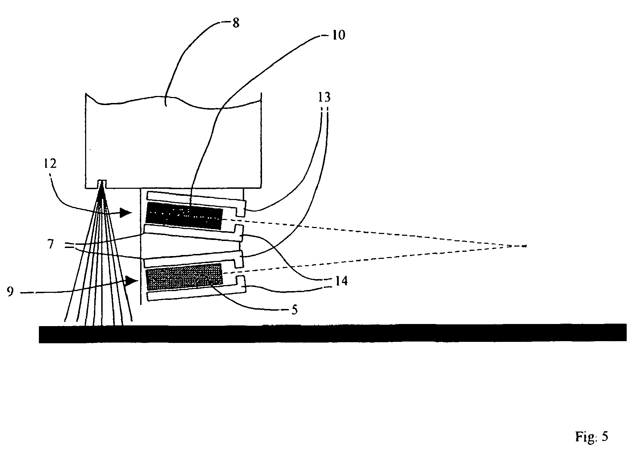

Durch diese Anordnung ist gewährleistet, dass bei entsprechender Beschaltung gemäß der Figuren 3 und 4 während eines Überprüfungsmodusses die Funktionsfähigkeit der einzelnen Sender 1 innerhalb der Senderleiste 9 und der einzelnen Empfänger 2 innerhalb der Empfängerleiste 12 geprüft werden kann.

Grundsätzlich sendet jede lichtemittierende Diode ein divergierendes Strahlenbündel mit einem so großen Strahlungswinkel aus, dass benachbarte Strahlenbündel bei einem vorbestimmten Abtast-Mindestabstand vom Hindernis einander überlappen und sich ein homogener und gut kontrollierbarer Abtastbereich ergibt. Das divergierende Sichtfeld jedes Fototransistors hat einen solchen Winkel, dass benachbarte Sichtfenster beim vorbestimmten Abtast-Mindestabstand vom Hindernis ebenfalls einander überlappen.

Die lichtemittierenden Dioden sind in Reihe geschaltet und werden mit einem pulsierenden Gleichstrom geeigenter Frequenz von einem Impulsgenerator gespeist, während die Fototransistoren parallel geschaltet sind und an den Eingang eines Verstärkers angeschlossen sind . Das Signal von den Fototransistoren wird nach Verstärkung gleichgerichtet und kann dann beispielsweise ein Relais betätigen. Da sämtliche lichtemittierenden Dioden mit den selben Signalen gespeist werden und die Signalspannung von sämtlichen Fototransistoren dem gemeinsamen Verstärker zugeführt werden, kann die Strahlung jeder beliebigen lichtemittierenden Diode nach Reflektion an einem Hindernis jeden beliebigen Fototransistor betätigen und somit den Verstärker ansteuern.

Gemäß der Figur 5 ist das Sendermodul 5 und das Empfängermodul 10 jeweils innerhalb eines metallischen, vozugsweise Aluminiumprofil 7 angeordnet. Das Profil 7 ist in Einbaulage nach vorne geöffnet und besteht aus zwei symmetrischen Schenkeln 13 und 14. Je nach Einbausituation dient einer der beiden Schenkel 13 zur Befestigung des Profiles 7 am Flügel 8. Beide Schenkel 13 und 14 sind vorderseitig abgewinkelt und mit hinterschnittenen nicht dargestellten Profilkanälen ausgebildet, an denen sich ein strahlungsdurchlässiges Abdeckprofil mittels entsprechend geformter Randbereiche einschieben lässt.

Die schwenkbare Befestigung der Profile 7 ermöglicht eine ideale Einstellung des Arbeitspunktes der beiden Leisten 9 und 12 und ermöglicht die so genannte Hintergrundausblendung. An der Senderleiste 9 geben die abgewinkelten Enden der Schenkel 13 und 14 die Richtung und Bündelung der von der Senderleiste 9 ausgesendeten Strahlen vor, während an der Empfängerleiste durch die abgewinkelten Enden der Schenkel 13 und 14 der Detektionsbereich und die Empfindlichkeit begrenzt werden. Des weiteren verhindern die Schenkel 13 und 14 einen optischen Kurzschluss.

Bei einem mit der vorbeschriebenen Sensoranordnung ausgestatteten motorisch angetriebenen Flügel 8 einer Tür sendet das Sendermodul 5 einen gebündelten gerichteten Strahl aus, wobei das reflektirende Licht ausgewertet wird. Dabei wird die Empfindlichkeit der Empfänger 2 derart eingestellt, dass das vom Boden reflektierte Licht nicht ausreicht, das Empfängermodul 10 zur Abgabe eines Signales zu erregen. Befindet sich dagegen auf dem Boden ein Hindernis, so trifft der emittierte Lichtstrahl bereits nach verkürzter Entfernung auf die Empfängerleiste 12, so dass insgesamt eine erhöhte Lichtmenge zum Empfängermodul 10 hin reflektiert wird. Damit wird ein Signal erzeugt. Dieses Signal wird von einer nicht dargestellten Steuerung ausgewertet, die daraufhin den Türantrieb steuert.

### Bezugszeichenliste

- 1: Sender
- 2: Empfänger
- 3: Hilfsempfänger
- 4: Hilfssender
- 5: Sendermodul
- 6: Vergussmasse
- 7: Profil
- 8: Flügel
- 9: Senderleiste
- 10: Empfängermodul
- 11: Vergussmasse
- 12: Empfängerleiste
- 13: Schenkel
- 14: Schenkel

## Patentansprüche

1. Sensoranordnung, welche Sender (1) und Empfänger (2) umfasst, für die Überwachung einer Raumzone mindestens eines motorisch angetriebenen Flügels (8) einer Tür, wobei die Sender (1) eingerichtet sind, eine Strahlung zu emittieren, und die Empfänger (2) eingerichtet sind, auf unterschiedliche starke Reflektion dieser Strahlung von einem abzutastenden Gegenstand zu reagieren und ein den Türantrieb steuerndes Signal zu erzeugen, **dadurch gekennzeichnet, dass** jedem Sender (1) zur Überprüfung seiner Funktionsfähigkeit ein Hilfsempfänger (3) zugeordnet ist und jedem Empfänger (2) zur Überprüfung seiner Funktionsfähigkeit ein Hilfssender (4) zugeordnet ist, wobei Sender (1) und Hilfsempfänger (3) jeweils nebeneinanderliegend zu einem Sendermodul (5) zusammengefasst sind und Empfänger (2) und Hilfssender(4) jeweils nebeneinanderliegend zu einem Empfängermodul (10) zusammengefasst sind.

2. Sensoranordnung nach Anspruch 1, **dadurch gekennzeichnet, dass** sowohl der Sender (1) und der Hilfsempfänger (3) als auch der Empfänger (2) und der Hilfssender (4) benachbart und achsengleich nebeneinander angeordnet sind.

3. Sensoranordnung nach einem der vorhergehenden Ansprüche, **dadurch gekennzeichnet, dass** mehrere Sender (1) und Hilfsempfänger (3) nebeneinanderliegend in einer Vergussmasse (6) angeordnet sind und dass mehrere Empfänger (2) und Hilfssender (4) nebeneinanderliegend in einer Vergussmasse (11) angeordnet sind.

4. Sensoranordnung nach einem der vorhergehenden Ansprüche, **dadurch gekennzeichnet, dass** die Sender (1) und Hilfsempfänger (3) austauschbar in dem Sendermodul (5) angeordnet sind und dass die Emfpänger (2) und Hilfssender (4) austauschbar in dem Empfängermodul (10) angeordnet sind.

5. Sensoranordnung nach einem der vorhergehenden Ansprüche, **dadurch gekennzeichnet, dass** das Sendermodul (5) und das Empfängermodul (10) jeweils innerhalb eines schwenkbar angeordneten Profiles (7) angeordnet sind.

6. Sensoranordnung nach einem der vorhergehenden Ansprüche, **dadurch gekennzeichnet, dass** das Sendermodul (5) und das Empfängermodul (10) spitzwinkelig zueinander angeordnet sind.

7. Sensoranordnung nach einem der vorhergehenden Ansprüche, **dadurch gekennzeichnet, dass** Sender- (5) und Empfängermodul (10) bodenseitig an dem Flügel (8) angeordnet sind.

8. Sensoranordnung nach einem der vorhergehenden Ansprüche, **dadurch gekennzeichnet, dass** Sender- (5) und Empfängermodul (10) über die gesamte Flügelbreite angeordnet sind.

9. Sensoranordnung nach einem der vorhergehenden Ansprüche, **dadurch gekennzeichnet, dass** Sender- (5) und Empfängermodul (10) an den Flügeln (8) einer Karusselltür angeordnet sind.

10. Sensoranordnung nach einem der vorhergehenden Ansprüche, **dadurch gekennzeichnet, dass** benachbarte Sender (1) so ausgelegt und beabstandet sind, dass ihre Strahlungsbündel divergieren sowie einander in einem erwünschten Mindestabstand vom abzutastenden Gegenstand überlappen und benachbarte Empfänger (2) divergierende, im erwünschten Mindestabstand vom abzutastenden Gegenstand, einander überlappende Sichtfelder aufweisen.

11. Sensoranordnung nach einem der vorhergehenden Ansprüche, **dadurch gekennzeichnet, dass** die Sender (1) und die Empfänger (2) in je einer Reihe derart angeordnet sind, dass die beiden Elementtypen ein Zick-Zack-Muster ergeben.

## Claims

1. A sensor arrangement, comprising senders (1) and receivers (2) for surveillance of a spatial zone of at least one motor-driven leaf (8) of a door, wherein the senders (1) are designed to emit radiation and the receivers (2) are designed to respond to this radiation deflected more or less intensely by an object to be scanned and to produce a signal controlling the door drive, **characterized in that** an auxiliary receiver (3) is assigned to each sender (1) for checking the functioning thereof, and an auxiliary sender (4) is assigned to each receiver (2) for checking the functioning thereof, the sender (1) and the auxiliary receiver (3) respectively adjacent to each other being combined to form a sender module (5) and the receiver (2) and the auxiliary sender (4) respectively adjacent to each other being combined to form a receiver module (10).

2. A sensor arrangement according to claim 1, **characterized in that** the sender (1) and the auxiliary receiver (3) as well as the receiver (2) and the auxiliary sender (4) are adjoining and disposed on the same axis adjacent to each other.

3. A sensor arrangement according to one of the preceding claims, **characterized in that** a plurality of senders (1) and auxiliary receivers (3) are disposed adjacent to each other in a sealing compound (6) and **in that** a plurality of receivers (2) an auxiliary senders (4) are disposed adjacent to each other in a sealing compound (11).

4. A sensor arrangement according to one of the preceding claims, **characterized in that** the senders (1) and auxiliary receivers (3) are exchangeably disposed in the sender module (5) and **in that** the receivers (2) and auxiliary senders (4) are exchangeably disposed in the receiver module (10).

5. A sensor arrangement according to one of the preceding claims, **characterized in that** the sender module (5) and the receiver module (10) are each disposed within a pivotally disposed profile (7).

6. A sensor arrangement according to one of the preceding claims, **characterized in that** the sender module (5) and the receiver module (10) are disposed at an acute angle with regard to each other.

7. A sensor arrangement according to one of the preceding claims, **characterized in that** the sender module (5) and the receiver module (10) are disposed at the leaf (8) on the floor side.

8. A sensor arrangement according to one of the preceding claims, **characterized in that** the sender module (5) and the receiver module (10) are disposed over the entire width of the leaf.

9. A sensor arrangement according to one of the preceding claims, **characterized in that** the sender module (5) and the receiver module (10) are disposed at the leaves (8) of a revolving door.

10. A sensor arrangement according to one of the preceding claims, **characterized in that** adjoining senders (1) are designed and spaced apart such that the radiation beams thereof diverge as well as overlap each other at a desired minimum distance from the object to be scanned, and **in that** adjoining receivers (2) present diverging and overlapping fields of view at a desired minimum distance from the object to be scanned.

11. A sensor arrangement according to one of the preceding claims, **characterized in that** the senders (1) and the receivers (2) are disposed in one row each such that both element types form a zig-zag pattern.

## Revendications

1. Groupement de détecteurs, comprenant des émetteurs (1) et des récepteurs (2) pour surveiller une espace au moins d'un vantail (8) d'une porte entraîné par moteur, les émetteurs (1) étant aménagés à émettre un rayonnement et les récepteurs (2) étant aménagés à réagir à ce rayonnement réfléchi plus ou moins intensément par un objet à scanner et à produire un signal contrôlant l'entraînement de la porte, **caractérisé en ce qu'**un récepteur auxiliaire (3) est associé à chaque émetteur (1) pour vérifier son bon fonctionnement et un émetteur auxiliaire (4) est associé à chaque récepteur (2) pour vérifier son bon fonctionnement, l'émetteur (1) et le récepteur auxiliaire (3) juxtaposés respectivement étant regroupés dans un module émetteur (5), et le récepteur (2) et l'émetteur auxiliaire (4) juxtaposés respectivement étant regroupés dans un module récepteur (10).

2. Groupement de détecteurs selon la revendication 1, **caractérisé en ce que** non seulement l'émetteur (1) et le récepteur auxiliaire (3), mais aussi le récepteur (2) et l'émetteur auxiliaire (4) sont avoisinants et agencés l'un à côté de l'autre sur le même axe.

3. Groupement de détecteurs selon l'une des revendications précédentes, **caractérisé en ce que** plusieurs émetteurs (1) et récepteurs auxiliaires (3) sont agencés juxtaposés dans une masse de scellement (6), et **en ce que** plusieurs récepteurs (2) et émetteurs auxiliaires (4) sont agencés juxtaposés dans une masse de scellement (11).

4. Groupement de détecteurs selon l'une des revendications précédentes, **caractérisé en ce que** les émetteurs (1) et les récepteurs auxiliaires (3) sont agencés de façon échangeable dans le module émetteur (5) et **en ce que** les récepteurs (2) et les émetteurs auxiliaires (4) sont agencés de façon échangeable dans le module récepteur (10).

5. Groupement de détecteurs selon l'une des revendications précédentes, **caractérisé en ce que** le module émetteur (5) et le module récepteur (10) sont chacun agencés au sein d'un profilé (7) agencé de façon pivotante.

6. Groupement de détecteurs selon l'une des revendications précédentes, **caractérisé en ce que** le module émetteur (5) et le module récepteur (10) sont agencés à angle aigu l'un par rapport à l'autre.

7. Groupement de détecteurs selon l'une des revendications précédentes, **caractérisé en ce que** le module émetteur (5) et le module récepteur (10) sont agencés sur le vantail (8) du côté du plancher.

8. Groupement de détecteurs selon l'une des revendications précédentes, **caractérisé en ce que** le module émetteur (5) et le module récepteur (10) sont agencés sur l'ensemble de la largeur du vantail.

9. Groupement de détecteurs selon l'une des revendications précédentes, **caractérisé en ce que** le module émetteur (5) et le module récepteur (10) sont agencés sur les vantaux (8) d'une porte tambour.

10. Groupement de détecteurs selon l'une des revendications précédentes, **caractérisé en ce que** des émetteurs (1) avoisinants sont conçus et espacés de façon à ce que leurs faisceaux de rayonnement divergent, de même qu'ils se superposent mutuellement à une distance minimum voulue de l'objet à scanner, et **en ce que** des récepteurs (2) avoisinants présentent des champs de vision divergeant et se superposant mutuellement à une distance minimum voulue de l'objet à scanner.

11. Groupement de détecteurs selon l'une des revendications précédentes, **caractérisé en ce que** les émetteurs (1) et les récepteurs (2) sont agencés chacun dans une rangée de façon à ce que les deux types d'éléments forment un dessin en zig-zag.
